# EUROPEAN PATENT APPLICATION

(11) **EP 3 059 700 A1**
(43) Date of publication of application: **24.08.2016**
(21) Application number: 16155687.3
(22) Date of filing: 15.02.2016
(51) Int. Cl.: G06Q 10/00, G06Q 10/06, G06Q 50/04, G05B 19/418, G05B 23/00

(54) **MANAGER, MANAGEMENT SYSTEM, MANAGEMENT METHOD, AND NON-TRANSITORY COMPUTER READABLE STORAGE MEDIUM**

(30) Priority: 17.02.2015 JP 2015028502; 17.09.2015 JP 2015184397
(71) Applicant: Yokogawa Electric Corporation, Tokyo 180-8750 (JP)
(72) Inventor: Nozaka, Yuichi, Tokyo, 180-8750 (JP); Gotou, Hirotsugu, Tokyo, 180-8750 (JP); Jinguu, Yoshiyuki, Tokyo, 180-8750 (JP); Takami, Go, Tokyo, 180-8750 (JP)
(74) Representative: Henkel, Breuer & Partner

(57) **Abstract**

A manager includes a storage that stores a registration information associated with an identification information and an information processing method, the identification information being assigned to each management target which is managed by the manager, the information processing method being for obtaining a state information indicating a state of the management target, an image obtainer configured to obtain an image, a reader configured to read the identification information included in an identifier in the image obtained by the image obtainer, and an information processor configured to obtain, from the storage, the information processing method which is associated with the identification information read by the reader, the information processor being configured to obtain the state information by using the information processing method obtained by the information processor.

## Description

### BACKGROUND

### Technical Fields

The disclosure relates to a manager, a management system, a management method, and a non-transitory computer readable storage medium.

Priority is claimed on Japanese Patent Application No. 2015-28502, filed February 17,2015, and Japanese Patent Application No. 2015-184397, filed September 17,2015, the contents of which are incorporated herein by reference.

### Related Art

In a plant and a factory (hereinafter called simply "plant" as a generic name of them), a DCS (Distributed Control System) is established, and an advanced automatic operation is implemented. In the distributed control system, field devices (for example, a measurement device, a manipulation device, a display device, an alarm device, and other devices) and a controller controlling the field devices are connected to each other via a network. In the plant in which the distributed control system is established, so as to prevent abnormal operations and keep measurement accuracy, a worker conducts maintenance of the field device periodically or non-periodically.

The maintenance of the field device is performed using a device manager which can perform wire communications or wireless communications to the field device. For example, this device manager is a note type computer, a tablet type computer, a PDA (Personal Digital Assistant), and so on. A tool (device management tool) for exclusive use for managing the field device is installed in device manager. When the maintenance of the field device is conducted, for example, a worker operates the device manager, and reads and checks contents of device information (parameter) which is set to the field device of a maintenance target, and a worker operates the device manager and sets new device information to the field device.

There is a case that field devices, of which communication protocols are different from each other, are mixed and installed in the plant. In this case, it is necessary that the device manager which conforms to a communication protocol implemented in the field device installed in the plant is prepared, and also necessary to select the device manager in accordance with the field device of a maintenance target and perform maintenance. For example, a device manager, which conforms to various communication protocols and can collectively manage various types of field devices which are distributedly installed in a field of the plant, is disclosed in "FieldMate (registered trademark) Versatile Device Management Wizard", [ONLINE], Yokogawa Electric Corporation, [searched in February 2, 2015], the Internet <URL:http://www.yokogawa.com/fld/pdf/fieldmate/BU01R01A01-00E.pdf>.

By using the device manager disclosed in "FieldMate (registered trademark) Versatile Device Management Wizard", [ONLINE], Yokogawa Electric Corporation, [searched in February 2, 2015], the Internet <URL:http://www.yokogawa.com/fld/pdf/fieldmate/BU01R01A01-00E.pdf>, in a case of a field device which has a communication function (field digital communication function), it is satisfactorily maintainable irrespective of a kind of the implemented communication protocol. However, not only devices which have the communication function, but also various types of devices which do not have the communication function, are installed in the plant. At a time of the maintenance of field devices, it is also necessary to manage (inspect and check) the devices which do not have the communication function,

For example, most of a valve and a pipe of manual operation, which are installed in the plant, do not have the communication function. However, at a time of the maintenance of field devices, it is necessary to check positions of a lever and a handle which operate opening and closing of a valve, to check inside and outside of the pipe with eyes, to perform a sound diagnosis, and so on. Various types of meters are disposed in the plant. At a time of the maintenance, it is also necessary to confirm (check) an indication value of these meters.

In addition, at a time of the maintenance of field devices, it is also necessary to manage a surrounding condition of the plant in addition to management of the device which does not have the communication function mentioned above. For example, most plant is built at a vast site, and there is a possibility that weeds grow up within and without the plant. For this reason, it is necessary to check whether or not weeds have grown up. In a case that weeds have grown up, for example, it is considered that insects affect operations of the plant. For this reason, it is one of the important matters to check whether or not weeds have grown up.

The device manager, which is disclosed in "FieldMate (registered trademark) Versatile Device Management Wizard", [ONLINE], Yokogawa Electric Corporation, [searched in February 2, 2015], the Internet <URL:http://www.yokogawa.com/fld/pd/fieldmate/BU01R01A01-00E.pdf>, cannot manage the device, which does not have the communication function, and weeds. However, at a time of the maintenance, it is necessary to manage all of management targets including the device which has the communication function, the device which does not have the communication function, and weeds. If the management targets can be managed by using the device manager mentioned above, the management of the plant can be performed more effectively than before.

### SUMMARY

A manager may include a storage that stores a registration information associated with an identification information and an information processing method, the identification information being assigned to each management target which is managed by the manager, the information processing method being for obtaining a state information indicating a state of the management target, an image obtainer configured to obtain an image, a reader configured to read the identification information included in an identifier in the image obtained by the image obtainer, and an information processor configured to obtain, from the storage, the information processing method which is associated with the identification information read by the reader, the information processor being configured to obtain the state information by using the information processing method obtained by the information processor.

Further features and aspects of the present disclosure will become apparent from the following detailed description of exemplary embodiments with reference to the attached drawings.

### BRIEF DESCRIPTION OF THE DRAWINGS

FIG. 1 is a block diagram illustrating a configuration of a main part of the management system in a first embodiment of the present invention.
FIG. 2 is a drawing illustrating an example of the registration information used by the manager in the first embodiment of the present invention.
FIG. 3A and FIG. 3B are drawings for explaining a first example of the algorithm used by the manager in an embodiment of the present invention.
FIG. 4A and FIG. 4B are drawings for explaining a second example of the algorithm used by the manager in an embodiment of the present invention.
FIG. 5A and FIG. 5B are drawings for explaining a third example of the algorithm used by the manager in an embodiment of the present invention.
FIG. 6A and FIG. 6B are drawings for explaining a fourth example of the algorithm used by the manager in an embodiment of the present invention.
FIG. 7A to FIG. 7C are drawings for explaining a fifth example of the algorithm used by the manager in an embodiment of the present invention.
FIG. 8A to FIG. 8C are drawings for explaining a sixth example of the algorithm used by the manager in an embodiment of the present invention.
FIG. 9A and FIG. 9B are drawings for explaining a seventh example of the algorithm used by the manager in an embodiment of the present invention.
FIG. 10 is a drawing for explaining an eighth example of the algorithm used by the manager in an embodiment of the present invention.
FIG. 11 is a flow chart illustrating a new registration operation of the manager in an embodiment of the present invention.
FIG. 12 is a flow chart illustrating a measurement determination operation of the manager in an embodiment of the present invention.

### DETAILED DESCRIPTION OF THE EMBODIMENTS

The embodiments of the present invention will be now described herein with reference to illustrative preferred embodiments. Those skilled in the art will recognize that many alternative preferred embodiments can be accomplished using the teaching of the present invention and that the present invention is not limited to the preferred embodiments illustrated herein for explanatory purposes.

An aspect of the present invention is to provide a manager, a management system, a management method, and a non-transitory computer readable storage medium, which can manage not only a device which does not have the communication function, but also various types of management targets which need to be managed in the plant.

The management system, the management method, and the non-transitory computer readable storage medium of the present embodiment will be described in detail below with reference to drawings.

### [Management System]

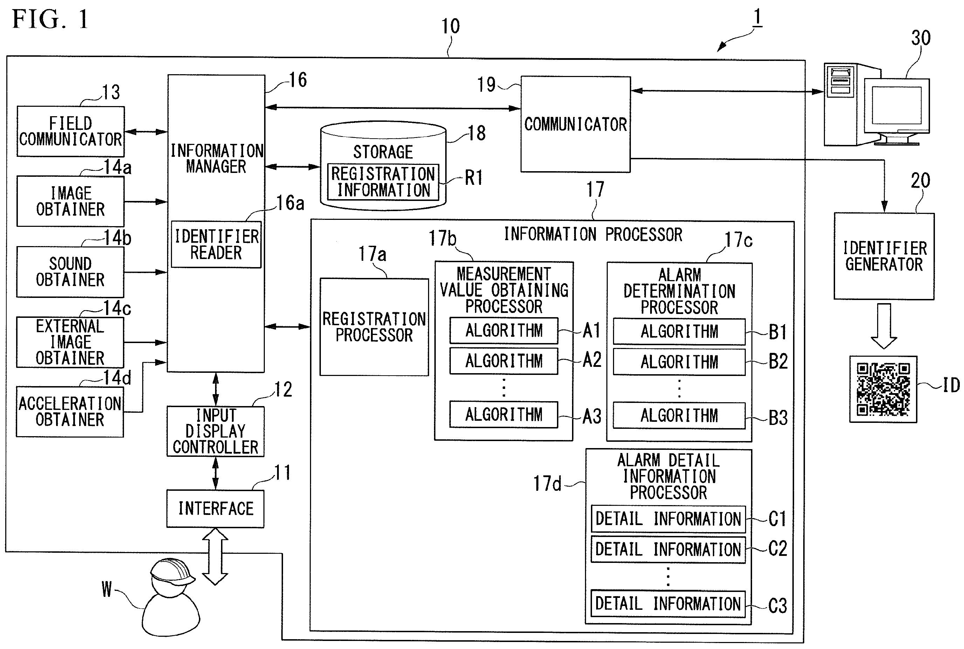

FIG. 1 is a block diagram illustrating a configuration of a main part of the management system in a first embodiment of the present invention. As shown in FIG. 1, the management system 1 of the present embodiment is equipped with a manager 10, an identifier generator 20, and a host device 30. The management system 1 is a system for managing various types of devices (management target) installed in the plant, and managing surrounding conditions (management target) of the plant.

In addition to the device (field device) which has the communication function, the various types of devices installed in the plant include devices which do not have the communication function. For example, the field devices, which has the communication function, include a sensor device (for example, a flowmeter and a temperature sensor), a valve device (for example, a flow control valve and an on-off valve), an actuator device (for example, a fan and a motor), and other devices which are installed in a field of the plant and controlled by a higher-controller (not shown). For example, the field devices, which do not have the communication function, include a manual valve, a pipe, and various types of meters, and so on. For example, the surrounding condition includes a condition indicating whether or not weeds have grown up within and without the plant.

The manager 10 is a device used in order to manage the various types of devices installed in the plant and the surrounding condition of the plant. The manager 10 is used by a worker W (user) who performs field operations of the plant. Specifically, in a case that the management target is a field device which has the communication function, the manager 10 performs a wire communication or a wireless communication to the field device, and obtains necessary information from the field device. Furthermore, the manager 10 performs maintenance of the field device by transmitting information, which should be set up, to the field device.

In a case that the management target is the device, which does not have the communication function, or the surrounding condition of the plant, the manager 10 obtains an image (a still picture or a moving picture), a sound, or acceleration, which are of the management target. The manager 10 performs various types of processes with respect to the obtained picture, sound, or acceleration, and the manager 10 obtains a measurement value (state information) which represents a state of the management target. The manager 10 determines whether or not the obtained measurement value is normal, and the manager 10 determines whether or not the state of the management target is normal. In a case that the manager 10 determines that the state of the management target is not normal, the manager 10 outputs detail information for performing a countermeasure.

The manager 10 obtains a picture of an identifier ID which is attached on the management target or near the management target. The manager 10 reads a tag (identification information uniquely assigned to each management target) included in the identifier ID, and the manager 10 identifies the management target (or specifies the management target). For example, the manager 10 is implemented by a note type computer, a tablet type computer, or a PDA. Details of the manager 10 will be described later.

In a case that the identifier generator 20 receives instructions of generating (instructions of generating the identifier ID) from an outside (for example, the manager 10), the identifier generator 20 generates the identifier ID by using the information (for example, tag) included in the instructions of generating. For example, the identifier ID shown in FIG. 1 is a matrix-type two-dimensional code such as a QR code (registered trademark). As described above, the identifier ID, which is generated by the identifier generator 20, is used in order to identify the management target. The identifier ID is attached on the management target or near the management target.

The host device 30 is a device which is positioned higher than the manager 10. For example, the host device 30 is used by an administrator who manages the entire plant, and the host device 30 generates registration information R1 (of which details will be described later) which is used by the manager 10. For example, the host device 30 is a part of an integration device management system which is established in the plant. The integration device management system has a function of managing a maintenance schedule of each field device (maintenance information managing function), a function of monitoring a condition of each field device and adjusting each field device (maintenance work function), and a function of recording and reporting a maintenance result (maintenance result managing function).

### [Manager]

Next, details of the manager 10 are described. As shown in FIG. 1, the manager 10 is equipped with an interface 11 (display), an input display controller 12, a field communicator 13, an image obtainer 14a (picture acquisition means), a sound obtainer 14b, an external image obtainer 14c, an acceleration obtainer 14d, an information manager 16, an information processor 17, the storage 18, and the communicator 19. For example, the manager 10 is connected to the identifier generator 20 and the host device 30 through a wireless network (not shown) which was established in the plant.

For example, the interface 11 is equipped with a liquid crystal display of touch panel type, which includes a display function and an operation function. The interface 11 displays the various types of information, which is outputted from the input display controller 12, on the liquid crystal display. In a case that an operation to a display surface of the liquid crystal display is performed, the interface 11 outputs, to the input display controller 12, operation information according to the operation. For example, as with a liquid crystal display and a keyboard, the display function and the operation function of the interface 11 may be physically separated.

The input display controller 12 performs a display control of information which should be displayed on the interface 11, and input display controller 12 performs an input control of the operation information according to the operation of the worker W to the interface 11. The field communicator 13 performs a wire communication or a wireless communication to the field device (not shown) installed in the plant. The field communicator 13 conforms to a plurality of communication protocols. For example, the field communicator 13 communicates with the field device in conformity with a communication protocol used for wire communication such as HART (registered trademark) and BRAIN, or a communication protocol used for wireless communication such as ISA100.11a and WirelessHART (registered trademark).

The image obtainer 14a is equipped with an image pick-up device which has a lens, an image sensor, and so on. For example, the image obtainer 14a obtains an image of the identifier ID, an image of the management target, and other images, digitizes the obtained images, and outputs it to the information manager 16. The sound obtainer 14b is equipped with a microphone. For example, the sound obtainer 14b obtains sound which is generated from the various types of devices disposed in the plant, and digitizes the obtained sound, and outputs it to the information manager 16.

The external image obtainer 14c is equipped with a connecting terminal to which an image device is connected. The external image obtainer 14c obtains images obtained by the image device. The connection between the external image obtainer 14c and the image device may be wire connection or wireless connection. For example, the image device connected to the external image obtainer 14c includes portable thermography, an X-ray radiographing device, a three-dimensional image photographic device, a spectral image photographic device, and so on. For example, the acceleration obtainer 14d is equipped with an accelerometer. The acceleration obtainer 14d obtains acceleration which acts on the manager 10. For example, the acceleration obtainer 14d is used in order to measure posture (inclination) of the manager 10.

The information manager 16 manages various types of information used by the manager 10. For example, the information manager 16 manages information which should be displayed on the interface 11, information which is inputted from the interface 11, information which is transmitted and received through the field communicator 13 and the communicator 19, information which is obtained by the image obtainer 14a, the sound obtainer 14b, the external image obtainer 14c, and the acceleration obtainer 14d, information which is processed by the information processor 17, and other information.

The information manager 16 has an identifier reader 16a. In a case that the image of the identifier ID is included in the image obtained by the image obtainer 14a, the identifier reader 16a reads the tag included in the identifier ID, and outputs the read tag to the information processor 17. The information manager 16 synchronizes the registration information R1 stored in the storage 18 and the registration information managed by the host device 30 based on instructions from the interface 11.

The information processor 17 is equipped with a registration processor 17a, a measurement value obtaining processor 17b, an alarm determination processor 17c, and an alarm detail information processor 17d. The information processor 17 performs various types of processes which are necessary for managing management targets (device which does not have the communication function, and surrounding condition of the plant) other than the field device which has the communication function. Specifically, the information processor 17 obtains an image (still picture or moving picture), a sound, or acceleration, which are of the management target. The information processor 17 performs various types of processes to the obtained picture, sound, or acceleration, and the information processor 17 calculates a measurement value which indicates a state of the management target. The information processor 17 determines whether or not the calculated measurement value is normal. The information processor 17 outputs the measurement value and the determination result (which is a result of determination whether or not the measurement value is normal) to the information manager 16. The information manager 16 displays on the interface 11 the measurement value and the determination result which were outputted from the information processor 17. Moreover, the information manager 16 stores in the storage 18 the measurement value and the determination result which were outputted from the information processor 17. Furthermore, in a case that the determination result which represents that the measurement value is not normal is obtained, the information manager 16 displays on the interface 11 detail information for performing a countermeasure in accordance with instructions from the interface 11.

The registration processor 17a performs a registration process of a new management target, an edit process of a registered management target, or a deletion process of a registered management target based on instructions from the interface 11. Specifically, in a case that instructions of registering the new management target are input from the interface 11, the registration processor 17a generates a tag which is to be assigned to the new management target, and generates registration information R1 in which the generated tag is associated with algorithm and detail information (of which details will be described later). The registration processor 17a outputs the generated registration information R1 to the information manager 16. The information manager 16 stores in the storage 18 the registration information R1 outputted from the registration processor 17a. In a case that the tag which is to be assigned to the new management target is generated, the registration processor 17a outputs the tag to the information manager 16. The information manager 16 instructs the identifier generator 20 to generate an identifier ID in which the tag outputted from the registration processor 17a is included.

For example, the registration processor 17a outputs, to the information manager 16, information which represents algorithms A1 to A3 which can be used by the measurement value obtaining processor 17b and information which represents algorithms B1 to B3 which can be used by the alarm determination processor 17c. The information manager 16 controls the interface 11 to display a list of the information outputted from the registration processor 17a. The registration processor 17a associates, with the generated tag, an algorithm (one of the algorithms A1 to A3, and one of the algorithms B1 to B3) and detail information (detail information corresponding to selected algorithm out of the algorithms B1 to B3), which are selected by the worker W. Thereby, the registration processor 17a generates the registration information R1.

In a case that edit instructions of the registered management target are inputted from the interface 11, the registration processor 17a reads the registration information R1 out of the storage 18. The registration processor 17a edits the registration information R1 based on the instructions input from the interface 11, and the edited registration information R1 is stored in the storage 18 again. Similarly, in a case that the deletion instructions of the registered management target are input from the interface 11, the registration processor 17a deletes the registration information R1 based on the instructions input from the interface 11.

The measurement value obtaining processor 17b performs processes for obtaining the measurement value which indicates a state of the management target based on the image obtained by the image obtainer 14a, the sound obtained by the sound obtainer 14b, the image obtained by the external image obtainer 14c, or the acceleration obtained by the acceleration obtainer 14d. Plurality of algorithms A1 to A3 (information processing method) for calculating the measurement value is preliminarily prepared in the measurement value obtaining processor 17b. Based on the registration information R1 stored in the storage 18, the measurement value obtaining processor 17b selects one of these algorithms A1 to A3, and performs the processes described above. An example of the algorithms A1 to A3 prepared in the measurement value obtaining processor 17b will be described later.

The alarm determination processor 17c determines whether or not the measurement value obtained by the measurement value obtaining processor 17b is normal. A plurality of algorithms B1 to B3 (information determining method) for determining the measurement value is preliminarily prepared in the alarm determination processor 17c. Based on the registration information R1 stored in the storage 18, the alarm determination processor 17c selects one of these algorithms B1 to B3, and performs the processes described above. An example of the algorithms B1 to B3 prepared in the alarm determination processor 17c will be described later.

In a case that the alarm determination processor 17c determines that the measurement value obtained by the measurement value obtaining processor 17b is not normal, the alarm detail information processor 17d displays the detail information for performing a countermeasure on the interface 11. Detail information C1 to C3 associated with the algorithms B1 to B3, which are prepared in the alarm determination processor 17c, is preliminarily prepared in the alarm detail information processor 17d. The alarm detail information processor 17d displays on the interface 11 one of these detail information C 1 to C3 based on the registration information R1 stored in the storage 18. For example, the detail information C1 to C3 includes information which represents a cause of the measurement value determined that it is not normal, information which represents a countermeasure, information which represents a repair trustee, information which represents replacement parts, and other information.

The storage 18 stores the registration information R1 which is generated by the registration processor 17a. In addition to the registration information R1, the storage 18 stores device information which is obtained from the field device, setting information which is set to the field device, work history information which represents a history of works performed by using the manager 10, information which is obtained by the image obtainer 14a, the sound obtainer 14b, the external image obtainer 14c, and the acceleration obtainer 14d, and other various types of information. For example, the storage 18 is implemented by using an SSD (Solid State Drive) or an HDD (Hard Disk Drive).

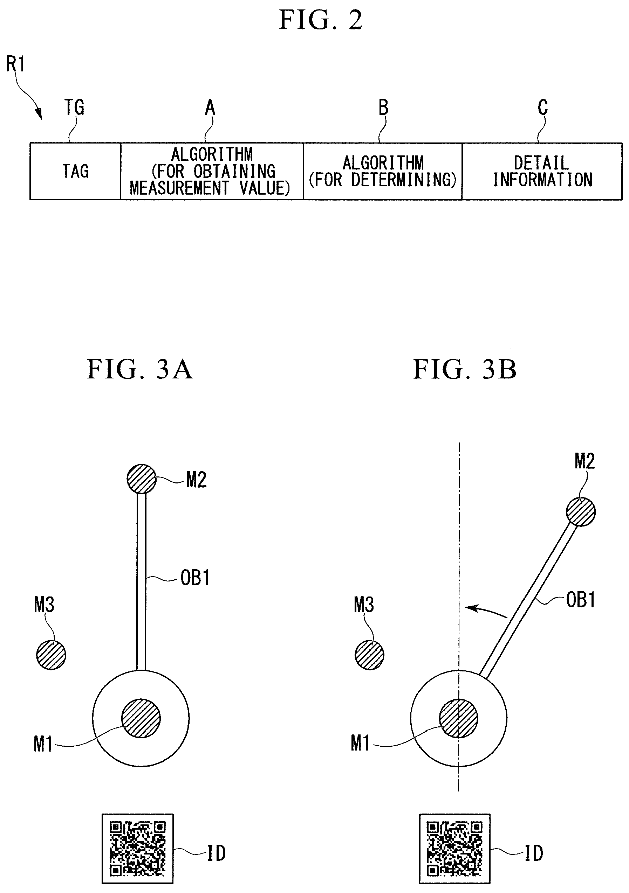

FIG. 2 is a drawing illustrating an example of the registration information used by the manager in the first embodiment of the present invention. As shown in FIG. 2, the registration information R1 is information associated with the tag TG, the algorithm A for obtaining the measurement value, the algorithm B for determining, and the detail information C. For example, the tag TG is a tag generated by the registration processor 17a. For example, the algorithm A for obtaining the measurement value is one of the algorithms A1 to A3 prepared in the measurement value obtaining processor 17b. For example, the algorithm B for determining is one of the algorithms B1 to B3 prepared in the alarm determination processor 17c. For example, the detail information C is one of the detail information C1 to C3 prepared in the alarm detail information processor 17d.

The communicator 19 performs a wire communication or a wireless communication to an external device. For example, the communicator 19 can communicate with the identifier generator 20 and the host device 30 through the wireless network (not shown) which is established in the plant. The communicator 19 can also directly communicate with the identifier generator 20 by the wire communication or the wireless communication which do not use the network.

Each block (for example, the information manager 16 and the information processor 17) prepared in the manager 10 is implemented by executing one or more programs for implementing each function by an MPU (Micro-Processing Unit: microprocessor) (not shown). That is, each block prepared in the manager 10 is implemented by cooperation of software and hardware resources.

For example, the program which implements the function is distributed in a state where the program was recorded in a recording medium such as a CD-ROM or a DVD (registered trademark) -ROM which can be read by a computer, or is distributed through an external network such as the Internet. The various types of functions prepared in the manager 10 are implemented by software, by reading the program out of the recording medium and installing the program, or by installing the program downloaded through the external network.

### [Specific Example of Algorithm]

### <First Example>

FIG. 3 is a drawing for explaining a first example of the algorithm used by the manager in an embodiment of the present invention. In the first example, the algorithm A for obtaining the measurement value measures rotation amounts of a lever, a handle, and a nut connected to a bolt, which are the management targets. In the first example, the algorithm B for determining determines whether or not the rotation amount (measurement value) of the management target is normal.

In the first example, it is necessary for the algorithm A for obtaining the measurement value to calculate a rotation amount of the management target OB1. Therefore, as shown in FIG. 3A, markers M1 to M3 are disposed on the management target OB1 and near the management target OB1. In the example shown in FIG. 3A, a lever is shown as the management target. The marker M1 is disposed on a rotary axis of the lever. The marker M2 is disposed on an end of the lever. The marker M3 is disposed on a position close to the lever and different from a position of the lever. A number of the markers and attachment positions of the markers can be suitably changed in accordance with the management target OB1.

In the first example, the algorithm A for obtaining the measurement value rotates an image (referring to FIG. 3B) of the management target OB1 obtained at present, with reference to the markers M1 to M3. The algorithm A measures, as a rotation amount of the management target OB1, angle of rotation of the obtained image when the obtained image is matched with a reference image (referring to FIG. 3A) of the management target OB1 which is obtained preliminarily. In this way, the information processor 17 measures the rotation amount of the lever, based on the algorithm A, by comparing positions of the first marker M1, the second marker M2, and the third marker M3, which are in the reference image of the lever, with positions of the first marker M1, the second marker M2, and the third marker M3, which are in the image obtained by the image obtainer 14a.

In the first example, the algorithm B for determining determines whether the measurement value is a normal state, an alarm state, or an abnormal state according to whether or not the measured rotation amount of the management target OB1 corresponds to a predetermined determination value. For example, the determination value of the normal state is from 0 degree to 30 degrees, the determination value of the alarm state is from 30 degrees to 45 degrees, and the determination value of the abnormal state is more than 45 degrees (or angle of minus).

### <Second Example>

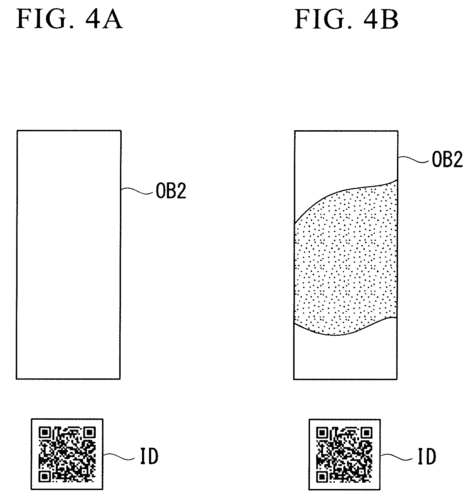

FIG. 4 is a drawing for explaining a second example of the algorithm used by the manager in an embodiment of the present invention. In the second example, the algorithm A for obtaining the measurement value measures an external change (for example, crack, discoloration, corrosion, and dent) of the management target. In the second example, the algorithm B for determining determines whether or not the external change of the management target is normal.

In the second example, the algorithm A for obtaining the measurement value respectively converts, into numerical values, a characteristic of a reference image (referring to FIG. 4A) of the management target OB2 which is preliminarily obtained and a characteristic of an image (referring to FIG. 4B) of the management target OB2 obtained at present, by using an evaluation function. The algorithm A normalizes coincidence degree of the characteristics of these two images into a range of 0 to 100, and measures the normalized value as the external change of the management target OB2. As the evaluation function, arbitrary functions can be used according to the characteristics of the management target OB2.

In the second example, the algorithm B for determining determines whether the measurement value is a normal state, an alarm state, or an abnormal state according to whether or not the measured external change of the management target OB2 corresponds to a predetermined determination value. For example, the determination value of the normal state is from 90 to 100, the determination value of the alarm state is from 80 to 90, and the determination value of the abnormal state is less than 80.

### <Third Example>

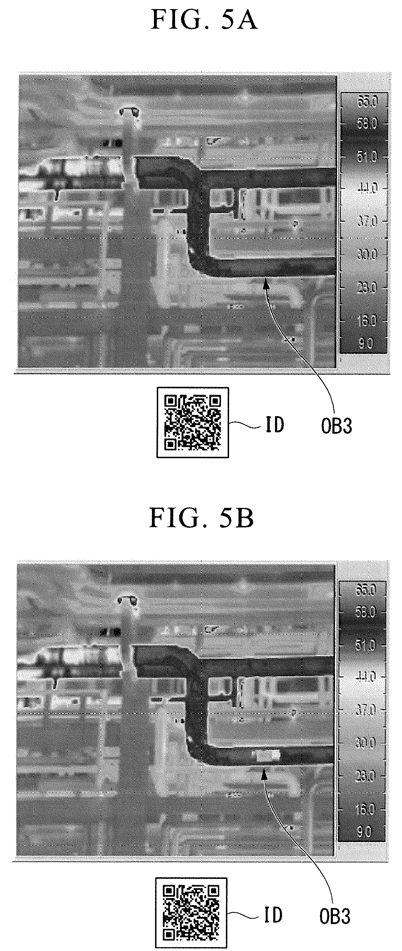

FIG. 5 is a drawing for explaining a third example of the algorithm used by the manager in an embodiment of the present invention. In the third example, the algorithm A for obtaining the measurement value measures a change of state (for example, temperature of a pipe, leakage of water in a pipe, and overheating of wiring) for the management target, which is difficult to be confirmed by human eyes. In the second example, the algorithm B for determining determines whether or not the change of the state of the management target is normal.

In the third example, similar to the second example, the algorithm A for obtaining the measurement value respectively converts, into numerical values, a characteristic of a reference image (referring to FIG. 5A) of the management target OB3 which is preliminarily obtained and a characteristic of an image (referring to FIG. 5B) of the management target OB3 obtained at present, by using an evaluation function. However, different from the second example, the reference image and the obtained image of the management target OB3 are images (for example, thermography) obtained by the external image obtainer 14c. The algorithm A normalizes coincidence degree of the characteristics of these two images into a range of 0 to 100, and measures the normalized value as the change of the state of the management target OB3. As the evaluation function, arbitrary functions can be used according to the characteristics of the management target OB3.

In the third example, similar to the second example, the algorithm B for determining determines whether the measurement value is a normal state, an alarm state, or an abnormal state according to whether or not the measured change of the state of the management target OB3 corresponds to a predetermined determination value. For example, the determination value of the normal state is from 90 to 100, the determination value of the alarm state is from 80 to 90, and the determination value of the abnormal state is less than 80.

### <Fourth Example>

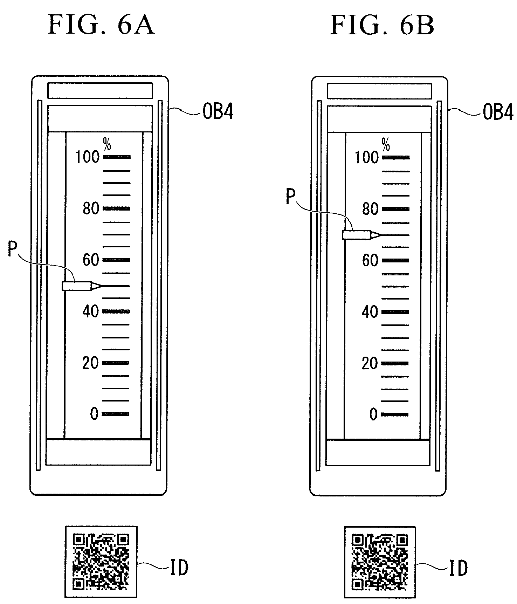

FIG. 6 is a drawing for explaining a fourth example of the algorithm used by the manager in an embodiment of the present invention. In the fourth example, the algorithm A for obtaining the measurement value measures an indicated value of a meter (analog meter) which is the management target. In the second example, the algorithm B for determining determines whether or not the indicated value of the management target is normal.

In the fourth example, the algorithm A for obtaining the measurement value preliminarily obtains a reference image (referring to FIG. 6A) of the management target OB4, and preliminarily registers a position of which indicated value is 0%, a position of which indicated value is 100%, and a feature (feature of shape and color) of an indicator P. The algorithm A determines a position of which indicated value in the obtained image (referring to FIG. 6B) of the management target OB4 obtained at present is 0% and a position of which indicated value in the obtained image (referring to FIG. 6B) of the management target OB4 obtained at present is 100%. The algorithm A measures the indicated value of the management target OB4 based on the relative position of the indicator P with respect to these positions.

In this way, the information processor 17 calculates a position of which indicated value is 0% and a position of which indicated value is 100%, which are in the image of the meter obtained by the obtainer 14a, based on the algorithm A. Also, the information processor 17 measures the indicated value of the meter, based on the algorithm A, in accordance with the relative position of the indicator P with respect to the position of which indicated value is 0% and the position of which indicated value is 100%, which are calculated by the information processor 17.

In the fourth example, the algorithm B for determining determines whether the measurement value is a normal state, an alarm state, or an abnormal state according to whether or not the measured indicated value of the management target OB4 corresponds to a predetermined determination value. For example, the determination value of the normal state is from 20 to 80, the determination value of the alarm state is from 10 to 20 or from 80 to 90, and the determination value of the abnormal state is less than 10 or more than 90.

### <Fifth Example>

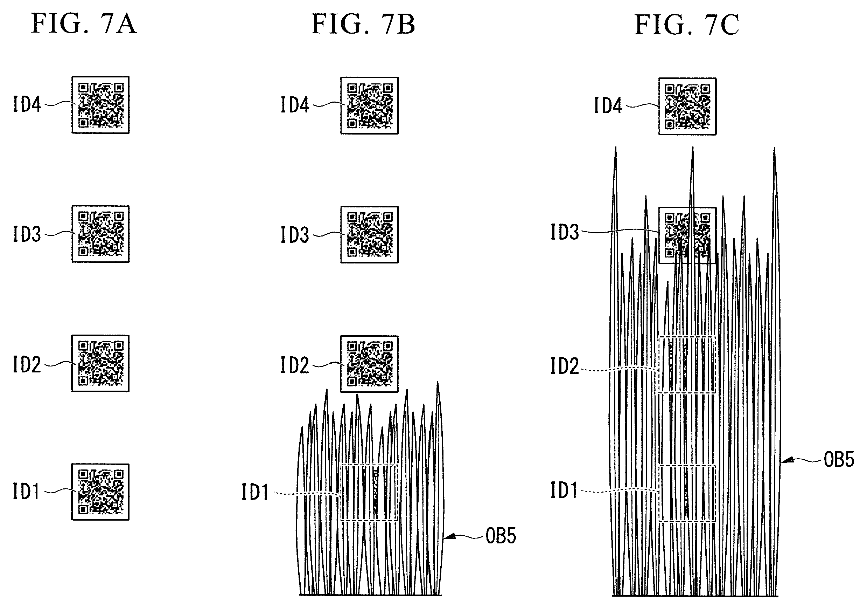

FIG. 7 is a drawing for explaining a fifth example of the algorithm used by the manager in an embodiment of the present invention. In the fifth example, the algorithm A for obtaining the measurement value measures a height of weeds which are the management targets. In the second example, the algorithm B for determining determines whether or not the height of the management target is normal.

In the fifth example, it is necessary for the algorithm A for obtaining the measurement value to calculate the height of the management target OB5. Therefore, as shown in FIG. 7A, Identifiers ID1 to ID4 are disposed at a constant interval (for example, 10 [cm] interval) in a vertical direction near the management target OB5. For example, the identifiers ID1 to ID4 are attached to a stick or a wall. The number of the identifiers is arbitrary. In addition to the tag for identifying the management target OB5, information which indicates the height is included in each of the identifiers ID1 to ID4.

In the fifth example, the algorithm A for obtaining the measurement value obtains images of the identifiers ID1 to ID4 disposed behind the management target OB5 throughout the management target OB5. The algorithm A measures the height of the management target OB5 according to whether or not information which represents the tag and the height which are included in each of the images of the identifiers ID1 to ID4. That is, the algorithm A measures the height of the management target OB5 by using the number, which changes according to the height, of the identifiers ID1 to ID4 interrupted by weeds which is the management target OB5. In this way, the information processor 17 measures the height of the weeds, based on the algorithm A, in accordance with the number of the tag (identification information) which is read by the identifier reader 16a.

As shown in FIG. 7A, in a case that the weeds, which is the management target OB5, have not grown up, because all of the identifiers ID1 to ID4 are not interrupted by the weeds, the algorithm A can read information which represents the tag and the height which are included in the identifiers ID1 to ID4. Therefore, in this case, the height of the weeds as the management target OB5 is measured as 0 [cm]. On the other hand, in the example shown in FIG. 7B, the identifier ID1 is interrupted by the weeds. In the example shown in FIG. 7C, identifiers ID1 to ID3 are interrupted by the weeds. For this reason, in the example shown in FIG. 7B, the algorithm A can read the information which represents the tag and the height which are included in the identifiers (identifiers ID2 to ID4) other than the identifier ID1. For this reason, the height of the weeds as the management target OB5 is measured as 10 [cm]. In the example shown in FIG. 7C, the algorithm A can read only the information which represents the tag and the height which are included in identifier ID4. For this reason, the height of the weeds as the management target OB5 is measured as 30 [cm].

In the fifth example, the algorithm B for determining determines whether the measurement value is a normal state, an alarm state, or an abnormal state according to whether or not the measured indicated value of the management target OB5 corresponds to a predetermined determination value. For example, the determination value of the normal state is less than 10 [cm], the determination value of the alarm state is from 10 [cm] to 30 [cm], and the determination value of the abnormal state is more than 30 [cm].

### <Sixth Example>

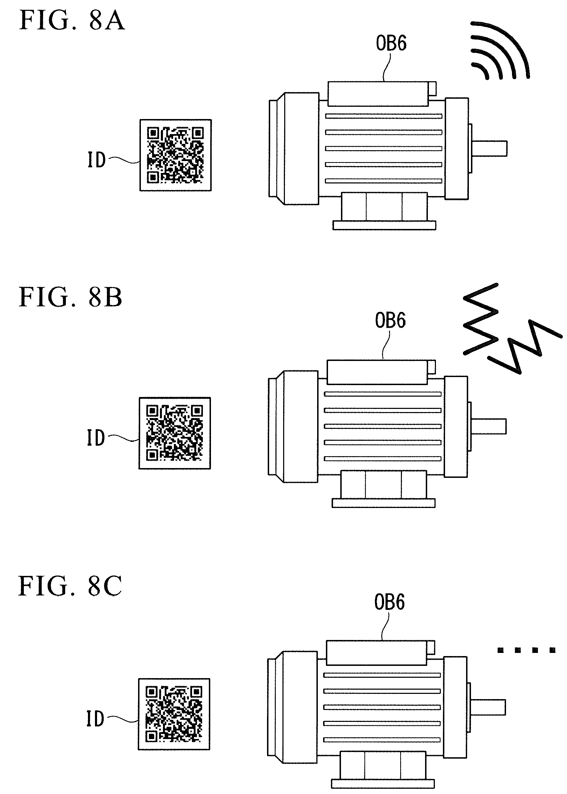

FIG. 8 is a drawing for explaining a sixth example of the algorithm used by the manager in an embodiment of the present invention. In the sixth example, the algorithm A for obtaining the measurement value measures a sound volume of a motor, which is the management target. In the second example, the algorithm B for determining determines whether or not the sound volume of the management target is normal.

In the sixth example, the algorithm A for obtaining the measurement value obtains the sound emitted from the management target OB6, and measures the volume of the obtained sound. The volume measured by the manager 10 changes greatly according to a distance between the manager 10 and the management target OB6. Before measuring the volume of the sound emitted from the management target OB6, the manager 10 is positioned close to the management target OB6 in order to obtain the image of the identifier ID. Therefore, if the sound volume is measured in this state, the algorithm A can measure it while keeping the distance between the manager 10 and the management target OB6 to be substantially constant. The algorithm A may determine the distance between the manager 10 and the management target OB6 based on the size of the image of the obtained identifier ID, and may correct the sound volume in accordance with the determined distance.

In the sixth example, the algorithm B for determining determines whether the measurement value is a normal state, an alarm state, or an abnormal state according to whether or not the measured sound volume of the management target OB6 corresponds to a predetermined determination value. For example, the determination value of the normal state is from 70 [dB] to 80 [dB], the determination value of the alarm state is from 60 [dB] to 70 [dB] or from 80 [dB] to 90 [dB], and the determination value of the abnormal state is less than 60 or more than 90 [dB]. For example, the determination value is set based on a reference volume of the management target OB6 obtained preliminarily. FIG. 8A is a drawing illustrating a state where sound of a reference volume is emitted from the management target OB6. FIG. 8B is a drawing illustrating a state where sound of a loud volume is emitted from the management target OB6. FIG. 8C is a drawing illustrating a state where sound is hardly emitted from the management target OB6.

### <Seventh Example>

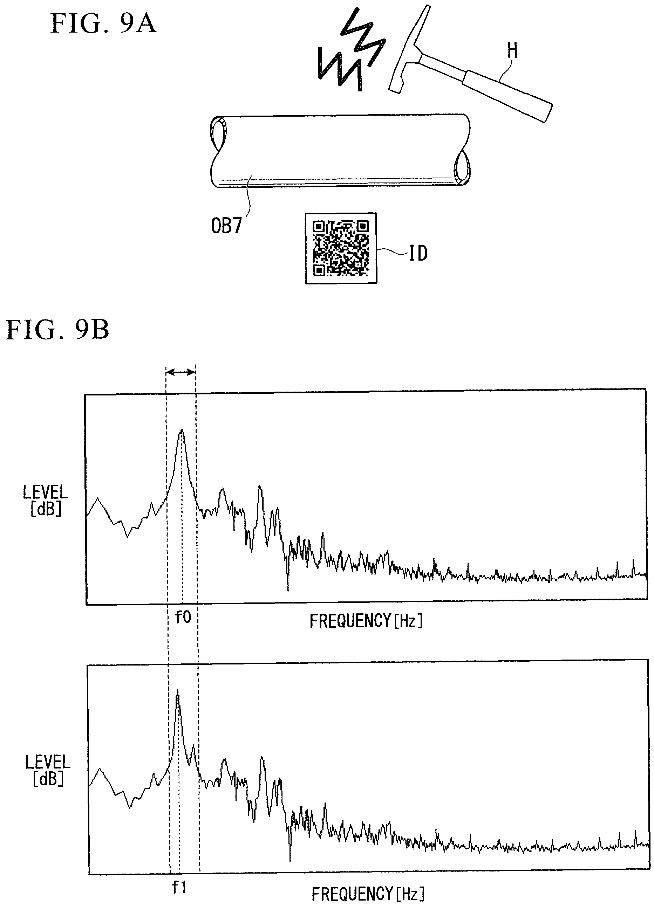

FIG. 9 is a drawing for explaining a seventh example of the algorithm used by the manager in an embodiment of the present invention. In the seventh example, the algorithm A for obtaining the measurement value measures a change of frequency of sound emitted when conducting a hammering test of a pipe which is the management target. In the seventh example, the algorithm B for determining determines whether or not the change of the frequency of the sound emitted from the management target is normal.

In the seventh example, as shown in FIG. 9A, the algorithm A for obtaining the measurement value preliminarily obtains a reference frequency f0 (referring to FIG. 9B) in which a level of the sound, which is emitted when the hammer H strikes a surface of the management target OB7, becomes the maximum. The algorithm A obtains a frequency f1 at present in which a level of the sound, which is emitted when the hammer H strikes the surface of the management target OB7, becomes the maximum. The algorithm A measures a difference between the reference frequency f0 and the frequency f1 as the change of the frequency. If the manager 10 is too far from the management target OB7, there is a possibility that sound emitted from other than the management target OB7 may also be measured. For this reason, similar to the sixth example, it is desirable for the algorithm A to obtain the sound emitted when the hammer H strikes the surface of the management target OB7, in a state that the manager 10 comes close to the management target OB7 to some extent.

In the seventh example, the algorithm B for determining determines whether the measurement value is a normal state, an alarm state, or an abnormal state according to whether or not the measured change of the frequency of the management target OB7 corresponds to a predetermined determination value. For example, the determination value of the normal state is less than ±5 [Hz], the determination value of the alarm state is equal to or more than ±5 [Hz] and less than ±10 [Hz], and the determination value of the abnormal state is equal to or more than ±10 [Hz].

### <Eighth Example>

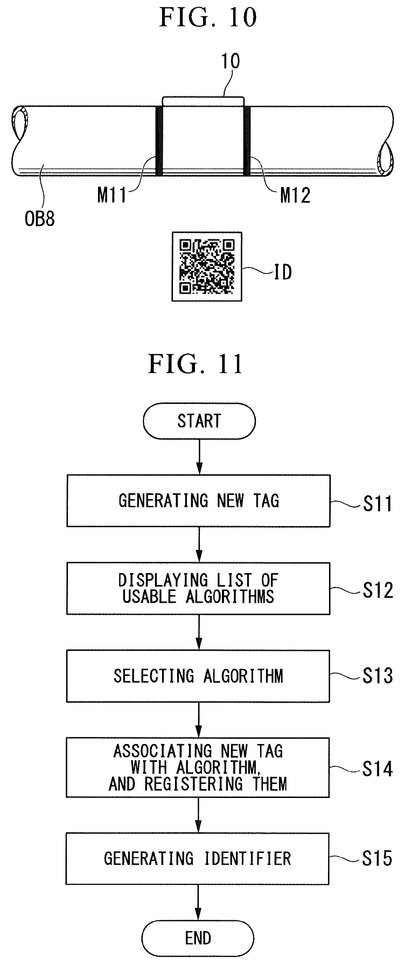

FIG. 10 is a drawing for explaining an eighth example of the algorithm used by the manager in an embodiment of the present invention. In the eighth example, the algorithm A for obtaining the measurement value measures an inclination amount of a pipe which is a management target. In the eighth example, the algorithm B for determining determines whether or not the inclination amount of the management target is normal.

In the eighth example, as shown in FIG. 10, the algorithm A for obtaining the measurement value preliminarily obtains a reference posture (reference inclination) of the manager 10 from the acceleration obtainer 14d when the manager 10 is mounted on the management target OB8 in accordance with markers M11 and M12 attached to the management target OB8. The algorithm A obtains a posture (inclination) at present of the manager 10 from the acceleration obtainer 14d when the manager 10 is mounted on the management target OB8 in accordance with markers M11 and M12 attached to the management target OB8. The algorithm A measures, as an inclination amount of the management target OB8, a gap amount of the posture (inclination) with respect to the reference posture (reference inclination)

In the eighth example, the algorithm B for determining determines whether the measurement value is a normal state, an alarm state, or an abnormal state according to whether or not the measured inclination amount of the management target OB8 corresponds to a predetermined determination value. For example, the determination value of the normal state is less than ±1 [degree], the determination value of the alarm state is equal to or more than ±1 [degree] and less than ±3 [degree], and the determination value of the abnormal state is equal to or more than ±3 [degree].

### [Management Method]

Next, a management method of managing management targets (devices which do not have the communication function, and surrounding condition of the plant) other than a field device which has a communication function by using the manager 10 is described. In order to manage such a management target, first, the manager 10 performs operation (new registration operation) of newly registering a management target. Next, the manager 10 obtains a measurement value of the registered management, and performs operation (measurement determination operation) of determining whether or not the obtained measurement value is normal. If needed, the manager 10 performs operation (edit operation) of editing the registration information R1 stored in the storage 18 of the manager 10, or performs operation (deletion operation) of deleting the registration information R1. These operations are described below.

### <New Registration Operation>

FIG. 11 is a flow chart illustrating a new registration operation of the manager in an embodiment of the present invention. Processes of the flow chart shown in FIG. 11 are started when the worker W instructs to the interface 11 a new registration for newly registering a management target. If the worker W instructs the new registration, the instructions are input from the interface 11 to the registration processor 17a of the information processor 17 through the input display controller 12 and the information manager 16.

First, the registration processor 17a generates a new tag (step S11). Next, information, which represents the algorithms A1 to A3 prepared in the measurement value obtaining processor 17b and the algorithms B1 to B3 prepared in the alarm determination processor 17c, is output from the registration processor 17a to the information manager 16. The information manager 16 outputs the information, which is output from the registration processor 17a, to the interface 11 through the input display controller 12. Thereby, the interface 11 displays a list of the information which represents the algorithms A1 to A3 and the algorithms B1 1 to B3 which can be used (step S12).

Subsequently, in accordance with an operation of the worker W to the interface 11, the input display controller 12 selects either of the algorithms A1 to A3 and the algorithms B 1 to B3 of which list is displayed on the interface 11 (step S 13). In a case that selection of the algorithms B1 to B3 is performed, an input of a determination value (determination value described by using FIG. 3 to FIG. 10) is also performed. The interface 11 inputs the information which represents a selected algorithm to the registration processor 17a of the information processor 17 through the input display controller 12 and the information manager 16.

As shown in FIG. 2, the registration processor 17a generates the registration information R1 by associating the tag (tag TG) which is generated at step S11, the algorithm (the algorithm A for obtaining the measurement value, and the algorithm B for determining) selected according to the operation of the worker W, and the detail information C (detail information C associated with the selected algorithm B for determining). The registration processor 17a registers the generated registration information R1 (step S14). Specifically, the registration processor 17a outputs the generated registration information R1 to the information manager 16. The information manager 16 stores in the storage 18 the registration information R1 outputted from the registration processor 17a. When the information manager 16 stores the registration information R1 in the storage 18, the information manager 16 also stores the determination value in the storage 18.

After the above processes are completed, the information manager 16 outputs generation instructions to the communicator 19. The generation instructions are instructions for making the identifier generator 20 generate the identifier ID in which the tag newly generated at step S11 is included. The communicator 19 outputs the generation instructions to the identifier generator 20. The identifier generator 20 generates the identifier ID in which the tag is included based on the generation instructions outputted from the communicator 19 (step S15).

If the identifier ID is generated by the identifier generator 20, for example, as shown in FIG. 3 to FIG. 10, the worker W attaches the generated identifier ID on the management target or near the management target. The management target and the identifier ID are associated with each other by doing this work. By reading the tag included in the identifier ID attached on the management target or near the management target, it becomes possible to identify the management target automatically.

### <Measurement Determination Operation>

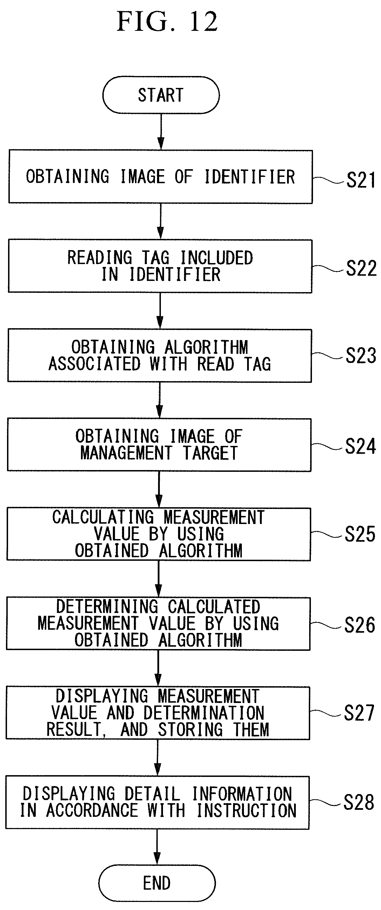

FIG. 12 is a flow chart illustrating a measurement determination operation of the manager in an embodiment of the present invention. Processes of the flow chart shown in FIG. 11 are started when the worker W performs, to the interface 11, work instructions for conducting a management work of the management target. If the worker W performs the work instructions, the instructions are input from the interface 11 to the information manager 16 through the input display controller 12.

The information manager 16 captures the image of identifier ID obtained by the image obtainer 14a (step S21). After performing the work instructions, the worker W operates the manager 10 so that identifier ID, which is attached on the management target or near the management target, can be arranged in a view of the image pick-up device disposed in the image obtainer 14a. By performing such operation, the image of the identifier ID can be obtained.

If the image of the identifier ID is obtained, the identifier reader 16a reads the tag included in the identifier ID (step S22). The information manager 16 reads out of the storage 18 the registration information R1, in which the tag read by the identifier reader 16a is included, and information relevant to this (for example, the determination value used by the algorithm B for determining). The information manager 16 obtains the algorithm (the algorithm A for obtaining the measurement value, and the algorithm B for determining) and the detail information which are associated with the tag (step S23). The information obtained by the information manager 16 is output to the information processor 17, and displayed on the interface 11.

If the information obtained by the information manager 16 is displayed on the interface 11, for example, the worker W operates the manager 10 so that the management target can be arranged in a view of the image pick-up device disposed in the image obtainer 14a, and the worker W performs photographing instructions to the interface 11. The photographing instructions are input from the interface 11 to the information manager 16 through the input display controller 12. The information manager 16 captures the image of the management target obtained by the image obtainer 14a (step S24). Here, although an example of obtaining the image of the management target is described, sound of the management target may be obtained, or an image obtained by the image device connected to the external image obtainer 14c may be obtained.

The information manager 16 outputs the obtained image to the measurement value obtaining processor 17b of the information processor 17. The measurement value obtaining processor 17b calculates the measurement value of the management target by using the algorithm (the algorithm A for obtaining the measurement value) obtained at step S23 (step S25). For example, if the management target is the management target OB1 shown in FIG. 3, the rotation amount is calculated. If the management target is the management target OB2 shown in FIG. 4, the external change is calculated. If the management target is the management target OB4 shown in FIG. 6, the indicated value is calculated.

Subsequently, by using the algorithm (the algorithm B for determining) obtained at step S23, the alarm determination processor 17c determines whether or not the measurement value calculated by the measurement value obtaining processor 17b is normal (step S26). For example, if the management target is the management target OB1 shown in FIG. 3, it is determined whether the rotation amount is a normal state, an alarm state, or an abnormal state. For example, if the management target is the management target OB2 shown in FIG. 4, it is determined whether the external change is a normal state, an alarm state, or an abnormal state. For example, if the management target is the management target OB4 shown in FIG. 6, it is determined whether the indicated value is a normal state, an alarm state, or an abnormal state.

After the above processes are completed, the information processor 17 outputs, to the information manager 16, the measurement value calculated by the measurement value obtaining processor 17b and the determination result of the alarm determination processor 17c. The information manager 16 stores, in the storage 18, the measurement value and the determination result, which were output from the information processor 17, and the information manager 16 displays, on the interface 11, the measurement value and the determination result which were output from the information processor 17 (step S27).

In a case that the determination result displayed on the interface 11 indicates the alarm state or the abnormal state, if the worker W performs display instructions of detail information to the interface 11, the display instructions are input from the interface 11 to the information processor 17 through the input display controller 12 and the information manager 16. The alarm detail information processor 17d of the information processor 17 displays, on the interface 11, the detail information according to the display instructions (step S28). Specifically, the detail information according to the display instructions is output from the alarm detail information processor 17d to the information manager 16. The information manager 16 outputs the detail information to the input display controller 12. The input display controller 12 displays the detail information, which is output from the information manager 16, on the interface 11. By referring to the detail information displayed on the interface 11, the worker W can know a cause of the alarm state or the abnormal state, a countermeasure, a repair trustee, replacement parts, and so on.

### <Edit / Deletion Operation>

If the worker W performs edit instructions of the registration information R1 stored in the storage 18 to the interface 11 of the manager 10, the edit instructions are input from the interface 11 to the information processor 17 through the display controller 12 and the information manager 16. The registration processor 17a of the information processor 17 outputs a read-out request of the registration information R1 to the information manager 16. The information manager 16 reads the registration information R1 out of the storage 18 based on the read-out request outputted from the registration processor 17a. The information manager 16 outputs the read registration information R1 to the registration processor 17a of the information processor 17, and displays the read registration information R1 on the interface 11. By referring to the displayed contents of the interface 11, the worker W can grasp an association of the tag TG registered into the registration information R1, the algorithm A for obtaining the measurement value, the algorithm B for determining, and the detail information C.

If the worker W performs change instructions of the registration information R1 to the interface 11 of the manager 10, in accordance with the change instructions, the registration processor 17a changes the association of the tag TG registered into the registration information R1, the algorithm A for obtaining the measurement value, the algorithm B for determining, and the detail information C. After the worker W performed the change instructions of the registration information R1, if the worker W performs edit end instructions of the registration information R 1 to the interface 11 of the manager 10, the registration processor 17a stores the changed registration information R1 in the storage 18. In this way, edit of the registration information R1 stored in the storage 18 is performed.

Similar to the case that the edit instructions are performed, if the worker W performs deletion instructions of the registration information R 1 to the interface 11 of the manager 10, the information manager 16 reads the registration information R1 out of the storage 18, and outputs the read registration information R1 to the registration processor 17a. Moreover, the information manager 16 displays the registration information R1 on the interface 11. The registration processor 17a deletes the information instructed by the worker W from the registration information R1. After the worker W performed deletion instructions of the registration information R1, if the worker W performs deletion end instructions of the registration information R1 to the interface 11 of the manager 10, the registration processor 17a stores, in the storage 18, the registration information R1 from which a part of the information was deleted. In this way, deletion of the registration information R1 stored in the storage 18 is performed.

If the worker W performs synchronous instructions to the interface 11, the synchronous instructions are input from the interface 11 to the information manager 16 through the input display controller 12. The information manager 16 obtains the information stored in the storage 18 and the information managed by the host device 30, and compares them. The information manager 16 synchronizes the information stored in the storage 18 and the information managed with the host device 30 by using the comparison result. Thereby, new information obtained by the work of the worker W is transmitted to the host device 30. For example, registration information of the newly registered measurement target, which is described in FIG. 11, is transmitted to the host device 30.

In a case that the worker W performed the synchronous instructions to the interface 11, if new information exists in the host device 30, the new information existing in the host device 30 is taken into the manager 10. For example, if the worker W performs the synchronous instructions to the interface 11 before the work using the manager 10, the new information existing in the host device 30 (for example, registration information R1 newly registered by the host device 30) is taken into the manager 10.

As described above, the manager 10 of the present embodiment obtains the image of the identifier ID attached on the management target or near the management target, reads the tag TG included in the identifier ID, and obtains the algorithm A for obtaining the measurement value, the algorithm B for determining, and the detail information C, which are associated with each other. The manager 10 obtains the measurement value which represents the state of the management target by using the obtained algorithm A for obtaining the measurement value, and determines whether or not the measurement value is normal.

For this reason, the manager 10 of the present embodiment can manage not only a device which does not have the communication function, but also various management targets which need to be managed in the plant. The manager 10 of the present embodiment automatically determines whether or not the measurement value of the management target is normal, by using the prescribed determination value. Thereby, the manager 10 can determine whether or not the measurement value of the management target is normal, without subjectivity of the worker W. Because the manager 10 of the present embodiment can also manage a field device which has the communication function, various types of management targets in the plant can be managed only by the manager 10. Furthermore, in a case that the manager 10 determines that the measurement value of the management target is not normal, the manager 10 displays the detail information C. Because the worker can know a cause thereof, a countermeasure, a repair trustee, replacement parts, and so on, working efficiency can be improved.

Although a manager, a management system, a management method, and a non-transitory computer readable storage medium according to embodiments of the present invention have been described above, the present invention is not restricted to the above-described embodiments, and can be freely modified within the scope thereof. For example, although the foregoing descriptions of the embodiments have been examples in which the identifier ID generated by the identifier generator 20 is a two dimensional code, the identifier ID generated by the identifier generator 20 may be a one dimensional code (what is called a bar code), may be a color code, may be a RFID (Radio Frequency IDentifier), and may be character strings such as a serial number.

In the embodiment, an example of calculating the measurement value indicating the state of the management target based on the image obtained by the image obtainer 14a, an example of calculating the measurement value indicating the state of the management target based on the sound obtained by the sound obtainer 14b, an example of calculating the measurement value indicating the state for the management target based on the image obtained by the external image obtainer 14c, and an example of calculating the measurement value indicating the state of the management target based on the acceleration obtained by the acceleration obtainer 14d, were explained. However, the manager 10 may calculate the measurement value indicating the state of the management target by combining at least two of the image obtained by the image obtainer 14a the sound obtained by the sound obtainer 14b, the image obtained by the external image obtainer 14c, and the acceleration obtained by the acceleration obtainer 14d. The manager 10 can also calculate the measurement value based on a moving picture (for example, a moving picture of a vibrating pipe) obtained by the image obtainer 14a or the external image obtainer 14c.

In the embodiment, an example, in which the manager 10 obtains the image (a still picture or a moving picture) and sound of the management target other than the field device which has the communication function, calculates the measurement value by performing various types of processes to the image and the sound which were obtained, and determines whether or not the measurement value is normal, was described. However, the manager 10 may perform only a process of calculating the measurement value indicating the state of the management target, and may omit the process of determining whether or not the measurement value is normal.

As used herein, the following directional terms "front, back, above, downward, right, left, vertical, horizontal, below, transverse, row and column" as well as any other similar directional terms refer to those instructions of a device equipped with the present invention. Accordingly, these terms, as utilized to describe the present invention should be interpreted relative to a device equipped with the present invention.

The term "configured" is used to describe a component, unit or part of a device includes hardware and/or software that is constructed and/or programmed to carry out the desired function.

Moreover, terms that are expressed as "means-plus function" in the claims should include any structure that can be utilized to carry out the function of that part of the present invention.

The term "unit" is used to describe a component, unit or part of a hardware and/or software that is constructed and/or programmed to carry out the desired function. Typical examples of the hardware may include, but are not limited to, a device and a circuit.

While preferred embodiments of the present invention have been described and illustrated above, it should be understood that these are examples of the present invention and are not to be considered as limiting. Additions, omissions, substitutions, and other modifications can be made without departing from the scope of the present invention. Accordingly, the present invention is not to be considered as being limited by the foregoing description, and is only limited by the scope of the claims.

## Claims

1. A manager comprising:
a storage that stores a registration information including an identification information and an information processing method which are associated with each other, the identification information being assigned to each management target which is managed by the manager, the information processing method being for obtaining a state information indicating a state of the management target;
an image obtainer configured to obtain an image;
a reader configured to read the identification information included in an identifier in the image obtained by the image obtainer; and
an information processor configured to obtain, from the storage, the information processing method which is associated with the identification information read by the reader, the information processor being configured to obtain the state information by using the information processing method obtained by the information processor.

2. The manager according to claim 1, further comprising:
at least one of a sound obtainer obtaining sound, an external image obtainer obtaining an image which is output from an image pick-up device, and an acceleration obtainer obtaining an acceleration,
wherein the information processor is configured to perform an information process, according to the information processing method obtained from the storage, to at least one of the image obtained by the image obtainer, the sound obtained by the sound obtainer, the image obtained by the external image obtainer, and the acceleration obtained by the acceleration obtainer, and the information processor obtains the state information of the management target.

3. The manager according to claims 1 or 2,
wherein the storage stores the registration information associated with an information determining method for determining whether or not the state information obtained by using the information processing method is normal, in addition to the identification information and the information processing method, and
wherein the information processor is configured to obtain, from the storage, the information determining method associated with the identification information read by the reader, and
wherein the information processor is configured to determine whether or not the state information is normal by using the information determining method obtained by the information processor.

4. The manager according to claim 3,
wherein the storage stores the registration information associated with a detail information which is displayed in a case that the state information is not normal, in addition to the identification information, the information processing method, and the information determining method, and
wherein the information processor is configured to display the detail information on a display in a case that the information processor determines that the state information is not normal.

5. The manager according to claims 3 or 4,
wherein the information processor is configured to display, on a display, the state information and a result of determining whether or not the state information is normal.

6. The manager according to claims 3 or 4,
wherein the information processor is configured to store, in the storage, the state information and a result of determining whether or not the state information is normal.

7. The manager according to any one of claims 3 to 6, further comprising:
a registration processor configured to generate the identification information which is to be assigned to a new management target, the registration processor being configured to store, in the storage, the registration information including the information processing method and the information determining method which are associated with the identification information generated by the registration processor.

8. The manager according to claim 7,
wherein the registration processor is configured to make an external identifier generator generate the identifier in which the identification information generated by the registration processor is included.

9. The manager according to claims 7 or 8,
wherein the registration processor is configured to display, on a display, a list of the information processing method and the information determining method which are usable by the information processor,
wherein the registration processor is configured to associate the information processing method and the information determining method, which are selected according to external instructions, with the identification information generated by the registration processor, and
wherein the registration processor is configured to store, in the storage, the information processing method and the information determining method which are associated with the identification information, as the registration information.

10. The manager according to any one of claims 7 to 9,
wherein the registration processor is configured to perform at least one of edit and deletion of the registration information stored in the storage in accordance with external instructions.

11. The manager according to any one of claims 1 to 10, further comprising:
an information manager configured to synchronize the registration information stored in the storage with a registration information managed by a host device.

12. The manager according to any one of claims 1 to 11, further comprising:
a field communicator configured to communicate with a field device which is installed in a plant.

13. A management system comprising:
the manager according to any one of claims 1 to 12; and
a host device configured to generate the registration information used by the manager.

14. A management method comprising:
obtaining an image of an identifier in which an identification information is included, the identification information being assigned to each management target which is managed by a manager;
reading the identification information included in the identifier in the image obtained by the obtaining;
obtaining an information processing method, which is associated with the identification information read by the reading, from the registration information including the identification information and the information processing method which are associated with each other, the information processing method being for obtaining a state information indicating a state of the management target; and
obtaining the state information by using the information processing method obtained by the obtaining.

15. A non-transitory computer readable storage medium storing one or more programs configured for execution by a computer, the one or more programs comprising instructions for:
storing, into a storage, a registration information including an identification information and an information processing method which are associated with each other, the identification information being assigned to each management target which is managed by a manager, the information processing method being for obtaining a state information indicating a state of the management target;
obtaining an image;
reading the identification information included in an identifier in the image;
obtaining, from the storage, the information processing method which is associated with the identification information; and
obtaining the state information by using the information processing method.
